# EUROPEAN PATENT SPECIFICATION

(11) **EP 0 944 327 B1**
(45) Date of publication and mention of the grant of the patent: **17.07.2002**
(21) Application number: 97918925.5
(22) Date of filing: 22.09.1997
(51) Int. Cl.: A22C 17/08, B04B 15/06

(54) **METHOD AND APPARATUS FOR RINSING PIECES OF MEAT**
VERFAHREN UND APPARAT ZUM SPÜLEN VON FLEISCHSTÜCKEN
PROCEDE ET APPAREIL POUR LE RINCAGE DE MORCEAUX DE VIANDE

(30) Priority: 20.09.1996 DK 102696
(43) Date of publication of application: 29.09.1999
(73) Proprietor: Amstrup, Fritz, 8850 Bjerringbro (DK)
(72) Inventor: Amstrup, Fritz, 8850 Bjerringbro (DK)
(74) Representative: Gregersen, Niels Henrik
(86) International application number: DK9700399
(87) International publication number: WO9812928

(56) References cited:
- DE-C- 815 014
- DK-C- 37 849
- GB-A- 157 350
- GB-A- 2 129 327
- NO-C- 59 266

## Description

The present invention relates to a method for rinsing pieces of meat and of the type described in the introductory part of claim 1.

Hitherto it has not been possible to exploit all meat in connection with slaughtering of domestic animals, in particular pigs and cattles, because minor meat parts of the individual animal to be slaughtered, for instance socalled marginal meat from the neck region, which meat during the slaughtering process have been in connection with the outflowing blood - for veterinary reasons and because of religious traditions - or because of the costs involved with manual clean cutting have been scrapped or alternatively been used fin the production of cat and dog food. In practice it primary concerns neck meat, namely socalled trimming meat or stab wound meat, which cannot be used as consumer meat, because it in connection with the slaughtering process itself is overflowed with blood etc.

The invention has for its purpose to provide a method for rinsing pieces of meat and which by means of simple provisions does it possible to use said marginal meat, which hitherto as a whole has been considered as useless - for consumer purposes.

The method according to the invention is distinctive in that a portion of said pieces of meat for instance in the order of 10 - 20 kg are centrifuged during simultaneously adding of cold rinsing water for a period of 2 - 4 minutes, and that said portion thereafter is further treated by centrifuging without adding water for a period in the order of 2 - 3 minutes, whereafter the rinsed meat, which now may be used for onsumer purposes, preferably automatically is emptied from the centrifuge. By simple provisions a combined scraber and massage treatment of the pieces of meat is hereby obtained, which pieces of meat subsequently are rinsed, so that it becomes possible to obtain veterinay approval of the rinsed meat for consumer purposes, for instance for the use by manufacturing of sausages, tinned meat and ready dinners. Furthermore a reduction of the fat content is obtained, because external fat on the pieces of meat during the treatment partly is removed.

However, it is a condition for such a veterinary approval of the rinsing method according to the invention, that said centrifuge may be cleaned effectively before and after treatment of a portion of meat, for instance in idle operation and rinsing through with hot water (about 82°) for a short period up to about 2 minutes, so that the centrifuge is cleaned and cleansed from fat and bacteria, before a new portion of meat to be rinsed is filled in the centrifuge.

The invention furthermore relates to an apparatus for carrying out the method according to the invention, and of the type described in the introductory part of claim 3.

This type of apparatus, which by way of example is described in DE-C-815 014, is originally developed for cleansing of cut up stomachs and third stomachs, but has also been used for cleansing and desliming of in advance turned intestines and cf. for instance Danish Patent Application No. 5299/80 also for degreasing of not turned intestines. For such cleansing purposes a current washing out of the waste is used, which is obtained by use of a surrounding nozzle tube placed along the periphery under said top plate and by use of a peripher row of drain holes between the edge of the bottom rotor plate and the lower, fixed part of the collecting container, so that the draining of water and waste is carried out via a drain under said drain holes. In spite of the presence of the drain holes the rotating bottom plate will still be able to sling the cleaned goods out against the side of the container, where the material by its sling inertia both will be slung against the innerside of the collecting container and carried around along this innerside, until the material is braked and falls back towards the bottom plate, which then again influences the material to be slinged.

In connection with this invention it is pointed out, that a such slinging and scrabing treatment may be advantageous also in relation to pieces of bloody consumer meat, but hereby it becomes a perceptible problem, that the known apparatuses are extremely difficult to clean so effectively, that the veterinary demands can be fulfilled. For instance it is almost impossible to carry out an effective cleansing in under the top plate of the container via the filling and emptying opening. It is furthermore problematic, that it is difficult to clean the very narrow slit ocurring between the fixed ring-shaped bottom part with said drain holes and the rotating bottom plate. This aimed narrow slit will be a fine growing place for bacteria, also in spite of the fact that it to some extent will be flowed through by the rinsing water, of which the main part however is drained through the holes in the fixed bottom part.

The apparatus according to the invention is distinctive in that said collecting container is connected with an underlying carrying chassis in a swing-open manner, so that the collecting container may be swung up to a position, in which it is possible for instance with a high-pressure cleaner to have free access to wash down the inner side of the top plate through the lower opening of the collecting container exposed by the swing-open thereof. In a simple manner it is hereby possible to make an effective rinsing, for instance with a high-pressure cleaner, of the innerside of the apparatus - in addition to said machine cleaning between treatment of the individual portions of meat.

If said ring-shaped bottom part with drain holes follow this swung up, there will also be access to said narrow slit, so that the opposite side edges of the bottom part are free available for effective cleaning.

By the apparatus according to the invention it is preferred, that said bottom part consists of a separate plate ring, which is detachably mounted on the carrying arms of the apparatus, so that this plate ring easily may be replaced with a second plate ring with drain holes of a different size, for instance with larger holes for use by rinsing of beef.

By said swung up of the collecting container the inner edge of the plate ring will not be exposed; but such an exposure may either take place during demounting of the bottom rotor plate from the driving shaft of the motor or - preferably - by the fact that the plate ring is mounted in a detachable manner on the bearing chassis. This can be done with a easy releasable bolt assembling; but preferably according to the invention more easy with a bayonet assembling, so that the plate ring may be de- and remounted by a simple turning movement. Hereby the plate ring - as a separate part - maby be easy detachable for effective cleaning af both edges and drain holes.

The invention is explained in more detail in the following with reference to the drawing, in which:-
- Fig. 1: shows a side view - partly in sections - of a known centrifuge,
- Fig. 2: shows a top view - partly in sections - cf. the perspective line A-B of the known centrifuge shown in Fig. 1,
- Fig. 3: shows a side view of a preferred embodiment for an apparatus according to the invention,
- Fig. 4: shows also a side view of the apparatus shown in Fig. 3 according to the invention, where the collecting container is swung up in relation to the bottom part of the apparatus,
- Fig. 5: shows a top view - corresponding to Fig. 2, that is where the lower part of a apparatus according to the invention is exposed, and
- Fig. 6: shows a top view of a loose plate ring to the apparatus according to the invention.

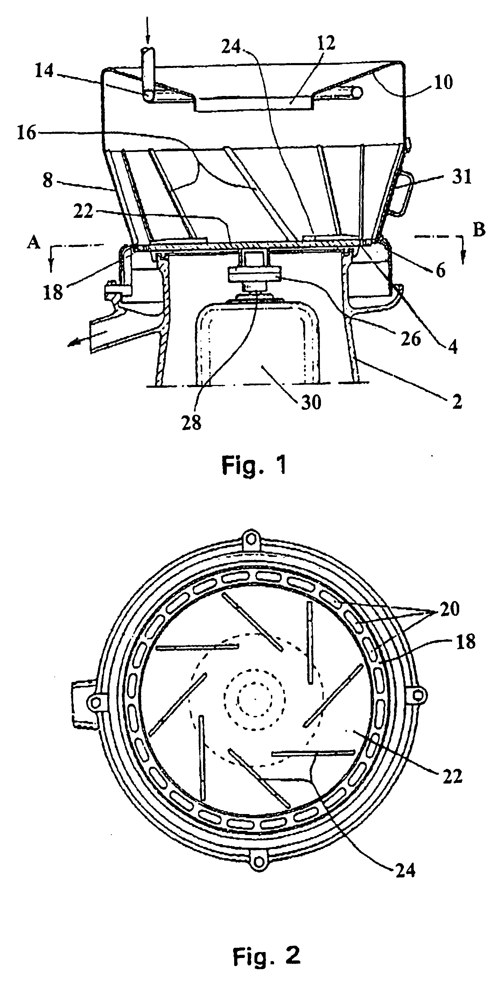

In Figs. 1 and 2 a known basic type of the apparatus in question is shown. This known apparatus comprises a lower chassis 2, which at upper, projecting wing parts 4 supports a plate rim 6, which at the top is assembled with the below edge of a container 8, which above is ended with an inwardly projecting top plate 10 with a central opening 12, around which a ring-shaped nozzle tube 14 is placed. The inner side of the container 8 is provided with lightly inclined ribs 16. At the passage between the plate rim 6 and the container 8 an inwardly projecting rigid plate ring 18 provided with a round-going row of holes 20 is positioned. Inside the plate ring 18 and on level with this a circular bottom plate 22 is placed having upstanding bringing along ribs 24 and a centrally downwards projecting coupling flange 26, respectively, by means of which the latter is secured to an upstanding axle journal 28 fra a driving motor 30 inside the chassis 2.

In the situation of operation the apparatus works in such a manner that products, which are filled down through the upper central opening 12, hit the rotating bottom plate 22, if the bringing along ribs 24 sling the products against and along the inner side of the collecting container 8, by which the products are exposed for a scraber or massaage effect according to how the ribs 16 are provided. When the treatment is finished the products may be emptied out through a side opening within a side flap 31, just by the swung up of this, as the rotating bottom disc 22 will take care of the sling out of the products.

This known apparatus forms on the whole a coherent unit, which almost is impossible to clean effectively. This has been acceptable as long as the apparatus has been used for its original purpose, as it is developped for, namely for cleansing of abdomens and intestines; but after statement in connection with the invention that this in principle known type of apparatus also is very useable for treatment of pieces of meat, it has also become necessary to modify the apparatus towards a more cleaning friendly construction. Particularly two places seem to be critical, namely the under side of the upper cover plate 10 and in particular the narrow split between the periphery of the rotating bottom disc 22 and the surrounding plate ring 18, because these part areas of the apparatus are difficult to clean effectively.

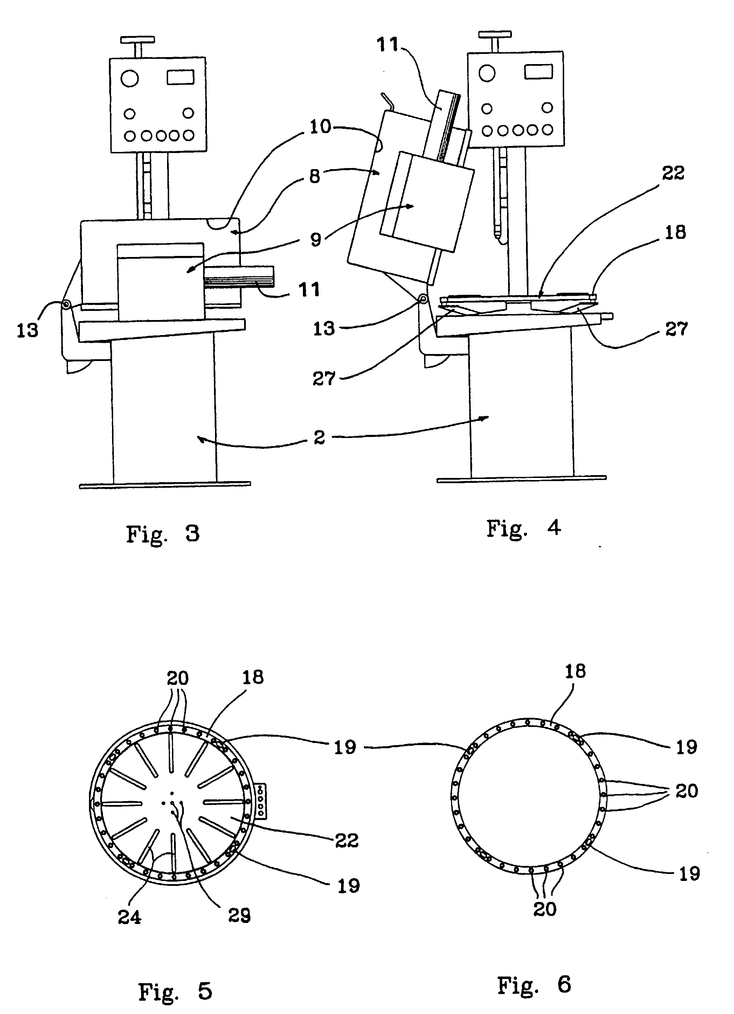

By the apparatus according to the invention, which in a preferred embodiment is shown in Figs. 3 and 4, the whole upper part in form of the collecting container 8 with belonging opening mechanism 9 for said side door operated by a pneumatic cylinder 11, via side hinges 13 is hinged to the chassis 2, so that the whole upper part may be swung out to the position shown in Fig. 4, where there is free access to wash down towards the underside of the shirt plate 10 and the inner side of the collecting container 8 inclusive the screened emptying opening.

The plate ring 18 is by the apparatus according to the invention - as a separate part - detachably mounted on radial arms 27 on the chassis 2, and the bottom disc 22 may easily be demounted by removal of one or several center screws 29, whereafter the bottom disc 22 may be lifted free from one og several driving pins of a flange on the motor axle. Hereby the bottom disc 22 and its outer edge may be cleaned effectively; and also the plate ring 18 with possible shell part become accessible for effective cleaning. Preferably the plate ring 18 - as shown in Figs. 5 and 6 - is mounted in a detachable manner, for instance by use of keyholes 19 and belonging upright dowels on the radial arms 27, so that more bayonet locks for the plate ring 18 are formed, which plate ring 18 then in a quick and simple manner may be de- and remounted in one turning movement. The plate ring 18 with belonging holes 20 of varying sizes suited the actual production may effectively be cleaned - for instance external.

Said possible shell part may without problems be permanently mounted in relation to the plate ring 18 on the chassis 2, as the swinging up of the collecting container and the easi demounting of the plate ring 18 allows easy access to effective cleaning of the inside of a such possible permanent shell part.

It shall be emphazied, that the method respectively the apparatus according to the invention primary is intended for rinsing of pieces of meat, namely trimmed meat from cattle, neck meat from pigs and socalled picking meat (trimming by cutting up); but it has furthermore become apparant, that it also is possible to use a modified apparatus according to the invention for deskinning of poultry feet, as during treatment in the combined slinging and scrabing centrifuge water is added with a temperature about 72° in order to soften the skin and to kill possible salmonella bacteria at the same time. The modification of the centrifuge primary involves that bringing along and scrabing ribs are made from rubber with a suitable hardness.

Said trimming meat from cattles primary comes from socalled trimming of necks. Meat with stab wounds may come from both pigs and cattles. Neck meat from pigs consists often of glands, fat and meat (about 1/3 of each kind).

By means of the method respectively to the apparatus according to the invention it is expected, that the following quantities of meat can be processed for consumer purposes. Concerning pigs it is expected to recover up till about 700 g and for cattles up til about 2500 g per animal.

In practice it may be advantageously to have a conveyer belt from the position of trimming to an intermediate container (buffer) placed over the filling opening 12 of the apparatus. When the buffer contains for instance 10 - 20 kg the filling may take place automatically via a bottom opening in the buffer or by dumping thereof.

Preferably cold water is added, about 20 l/min, during the primary rinsing of pices of meat for about 2,5 minutes, before the pieces of meat are drained during continuous centrifuging withou adding water for further 2,5 min, which preferably happens automatically. During the rinsing a considerable cooling of the pieces of meat from about 35° to about 15° (water temperature about 9°) furthermore is obtained, that is that as a consequence of both treatment and rinsing and quick cooling a very considerable reduction of the germ figur is obtained.

Preferably - as mentioned - cold water is used for the rinsing of the pieces of meat; but exceptionally it may be talked of using rinsing water of about 40o, if it concerns pieces of meat with much fat.

Finally it shall be mentioned, that the apparatus according to the invention also advantageously may find more general use within the slaughterhouse trade, for instance for cleaning, desliming and not least degreasing of abdomens from cattle and pigs and intestines. In particular the fact that it is possible to clean the apparatus effectively, fulfill all considerable veterinary demands for cleaning of apparatuses.

## Claims

1. A method for rinsing pieces of meat, which preferably in connection with the slaughtering process itself have been poured over with blood, and therefore cannot be approved for consumer purposes, during which rinsing a known centrifuge of the slinging/scrabing type is used, ***characterized* in that** a portion of said pieces of meat for instance in the order of 10 - 20 kg are centrifuged during simultaneously adding of cold rinsing water for a period of 2 - 4 minutes, and that said portion thereafter is further treated by centrifuging without adding water for a period in the order of 2 - 3 minutes, whereafter the rinsed meat, which now may be used for consumer purposes, preferably automatically is emptied from the centrifuge.

2. A method according to claim 1, ***characterized* in that** said centrifuge in operation and rinsing with hot water (about 82°) for a short period up till about 2 minutes is cleaned and cleansed from fat and bacteria, before the centrifuge is filled up with a new portion of meat for rinsing.

3. An apparatus to be used by performing of the method according to claim 1 and provided as a centrifuge of the slinging/scrabing type, that is with a stationary mainly cylindric collecting container (8) for treatment material, preferably pieces of meat, which container (8) at its bottom having a motor-driven, circular plate (22) with bringing along ribs (24), said container (8) at least at a lower part of the inner side is provided with upright inclined ribs (16) and a side opening covered by an opening flap (31) for emptying the treated material, which preferably is filled in through a central filling opening (12) in a top plate (10) of the container (8), ***characterized* in that** said collecting container (8) is connected with an underlying carrying chassis (2) in a swing-open manner, so that the collecting container (8) may be swung up to a position, in which it is possible for instance with a high-pressure cleaner to have free access to wash down the inner side of the top plate through the lower opening of the collecting container exposed by the swing-open thereof.

4. An apparatus according to claim 1, ***characterized* in that** said bottom part consists of a separate plate ring (18), which is detachably mounted on the carrying arms (27) of the apparatus.

## Patentansprüche

1. Verfahren zum Spülen von Fleischstücken, die vorzugsweise im Zusammenhang mit dem Schlachtverfahren an sich mit Blut übergossen worden sind, und deshalb nicht zu Verbraucherzwecken zugelassen werden können, während welches Spülens eine bekannte Zentrifuge vom Schleuder-/Schab-Typ verwendet wird, **dadurch gekennzeichnet, dass** eine Portion der erwähnten Fleischstücken, zum Beispiel in der Größenordnung 10-20 kg, während der gleichzeitigen Zuführung von kaltem Spülwasser während eines Zeitraums von 2-4 Minuten zentrifugiert wird, und dass die erwähnte Portion danach durch Zentrifugierung ohne Zuführung von Wasser während eines Zeitraums in der Größenordnung 2-3 Minuten weiter bearbeitet wird, wonach das gespülte Fleisch, das jetzt zu Verbraucherzwecken verwendet werden darf, vorzugsweise automatisch aus der Zentrifuge entleert wird.

2. Verfahren nach Anspruch 1, **dadurch gekennzeichnet, dass** die erwähnte Zentrifuge im Betrieb und beim Spülen mit heißem Wasser (von ungefähr 82°), während eines kurzen Zeitraums bis zu ungefähr 2 Minuten von Fett und Bakterien gereinigt und gespült wird, vor der erneuten Auffüllung der Zentrifuge mit einer zu spülenden Fleisch-Portion.

3. Apparat, das zur Verwendung durch die Ausübung des Verfahrens nach Anspruch 1 bestimmt ist, und das wie eine Zentrifuge vom Schleuder-/Schab-Typ vorgesehen ist, dass heißt mit einem stationären hauptsächlich zylindrischen Sammelbehälter (8) für zu bearbeitendes Material, vorzugsweise für Fleischstücke, welcher Behälter (8) an seinem Boden eine Motor-getriebene zirkuläre Platte (22) mit Mitnehmer-Rippen (24) ausweist, wobei der erwähnte Behälter (8) mindestens an einem niedrigeren Teil der inneren Seite mit aufrechtstehenden Rippen (16) und einer Seiten-Öffnung vorgesehen ist, die von einer Öffnungsklappe (31) zum Entleeren des bearbeiteten Materials abgedeckt ist, das vorzugsweise durch eine zentrale Füllöffnung (12) in einer Oberplatte (10) des Behälters aufgefüllt wird, **dadurch gekennzeichnet, dass** der erwähnte Sammelbehälter (8) mit einem unterliegenden Träger-Chassis (2) schwenkbar verbunden ist, damit der Sammelbehälter (8) zu einer Stellung aufgeschwungen werden kann, worin es möglich ist, zum Beispiel mit einem Hochdruckreiniger, freien Zugang zum Abbrausen der inneren Seite der Oberplatte durch die niedrigere Öffnung des Sammelbehälters zu bekommen, die durch die Aufschwingung davon bloßgelegt wird.

4. Apparat nach Anspruch 1, **dadurch gekennzeichnet, dass** der erwähnte untere Teil aus einem separaten Plattenring (18) besteht, der auf den Trägerhebeln (27) des Apparats lösbar montiert ist.

## Revendications

1. Procédé pour le rinçage de morceaux de viande, qui de préférence en relation avec le processus d'abatage en soi ont été couverts de sang et, par conséquant, ne peuvent être approuvés à des fins de consummation, lors dudit rinçage une centrifugeuse connue du type élingage/grattage est utilisée, **caractérisé** en qu'une portion desdits morceaux de viande par exemple 10 à 20 kg est centrifugée en addant en même temps de l'eau de rinçage froide pour une période de 2 à 4 minutes, et que ladite portion ensuite est traitée davantage en centrifugant sans l'addition de l'eau pour une période de 2 à 3 minutes, après quoi la viande rincée, qui maintenant peut être utilisée pour la consommation, est vidée de la centrifugeuse de préférence automatiquement.

2. Procédé selon la revendication 1, **caractérisé** en que ladite centrifugeuse en fonctionnement et rinçage avec de l'eau chaude (d'environ 82°) pour une courte période jusqu'à 2 minutes est nettoyée et dégraissée de graisse et de bactéries avant que la centrifugeuse soit remplie d'une nouvelle portion de viande pour rinçage.

3. Appareil pour être utilisé pour l'utilisation du procédé selon la revendication 1 et prévu comme une centrifugeuse du type élingage/grattage, c'est à dire avec un conteneur stationaire de préférence cylindrique (8) pour la matière à traiter, de préférence des morceaux de viande, ledit conteneur (8) au fond comporte une plaque circulaire à moteur (22) avec des nervures d'entraînement (24), ledit conteneur (8) étant prévu au moins sur une partie inférieure du côté intérieur de nervures penchées verticalement (16) et d'une ouverture latérale couverte d'un volet à charnière (31) pour le vidange de la matière traitrée, qui de préférence est remplie à travers d'une ouverture de remplissage centrale (12) dans la plaque de dessus (10) du conteneur (8), **caractérisé** en que ledit conteneur (8) est relié à un châssis de support (2) de manière oscillante de sorte que le conteneur (8) peut être oscillé à une position dans laquelle il est possible par exemple avec un nettoyeur à haute pression d'avoir accès libre pour rincer le côté intérieur de la plaque de dessus à travers de l'ouverture inférieure du conteneur exposée par l'oscillation de celle-ci.

4. Appareil selon la revendication 1, **caractérisé** en que ladite partie du fond comporte une chevalière séparée (18) qui est montée de manière détachable sur les bras de support (27) de l'appareil.
